# EUROPÄISCHE PATENTANMELDUNG

(11) **EP 1 158 392 A2**
(43) Veröffentlichungstag der Anmeldung: **28.11.2001**
(21) Anmeldenummer: 01108366.4
(22) Anmeldetag: 03.04.2001
(51) Int. Cl.: G06F 3/033

(54) **Bedienverfahren, insbesondere für Komfortfunktionen im Kraftfahrzeug**

(30) Priorität: 20.05.2000 DE 10025096
(71) Anmelder: ROBERT BOSCH GMBH, 70442 Stuttgart (DE)
(72) Erfinder: Guenther, Anke, 76275 Ettlingen (DE); Guenther, Clemens, 76275 Ettlingen (DE)

(57) **Zusammenfassung**

Die vorliegende Erfindung schafft ein Bedienverfahren zur Steuerung zweier Funktionsgruppen mittels eines Bedienelements, sowie das Bedienelement selbst. Zwei Funktionsgruppen, die operativ miteinander vorzugsweise gar nicht in Verbindung stehen, werden durch ein einheitliches, einfaches und leicht merkbares, das heißt intuitiv erlernbares, Bedienkonzept beruhend auf fortgesetztem Drehen einer Bedienung zugänglich gemacht. Dies wird durch eine Kombination aus Drehdrückschalter mit integrierter Wippe als Bedienelement zur Steuerung der beiden Funktionsgruppen erreicht, sowie einem kleinen Display, das als Kontrollanzeige dient. Linksdrehen aktiviert die eine Funktionsgruppe, Rechtsdrehen die andere.

## Beschreibung

### STAND DER TECHNIK

Die vorliegende Erfindung betrifft ein Bedienverfahren, insbesondere für Komfortfunktionen im Kraftfahrzeug, zur Steuerung zweier Funktionsgruppen mittels eines Bedienelements, sowie das Bedienelement selbst.

Obwohl auf beliebige Bedienkonzepte anwendbar, werden die vorliegende Erfindung sowie die ihr zugrunde liegende Problematik in Bezug auf ein an Bord eines befindliches Kraftfahrzeugs Bedienkonzept erläutert, insbesondere hinsichtlich einer Bedienmethode für Komfortfunktionen in einem Automobil.

Aus verschiedenen Fahrzeugen der Ober- und Mittelklasse sind integrierte Bediensysteme mit großem Bildschirm für Audio-, Klima- und Navigationskomponenten im Fahrzeug bekannt. Das zentrale Bedienelement ist bei solchen Systemen ein Dreh-/Drückschalter, mit Hilfe dessen durch Drehen eine Markierung auf einem Bildschirm verschoben wird, auf dem Bildschirm eine der Markierung entsprechende Zuordnung zu einer Bediengröße sichtbar gemacht wird, und danach durch Drücken die ausgewählte Funktion gestartet beziehungsweise ein neues Menü aufgerufen wird, das dann wiederum durch Drehen bedienbar ist.

Solche Systeme sind im allgemeinen aufwendig und teuer. Bei Kraftfahrzeugen sind nicht-integrierte Systeme üblich. Bei solchen nicht-integrierten Systemen besitzt jedes Gerät seine eigene Anzeigeeinheit und jede Funktion wird über eine separate Taste oder einen Drehschalter oder ähnliche Schalter bedient. Solche Systeme sind zwar günstig in der Herstellung, sie sind jedoch unflexibel und schlecht erweiterbar. Des weiteren läßt der Bedienkomfort zu wünschen übrig, da durch die Vielzahl an Bedienelementen der Fahrer beim Bedienen eines Gerätes zu sehr abgelenkt wird. Ein Grund dafür besteht darin, daß die Bedienfunktionen nicht einheitlich realisiert sind.

### VORTEILE DER ERFINDUNG

Das erfindungsgemäße Verfahren mit den Merkmalen des Anspruchs 1 und die entsprechende Vorrichtung gemäß Anspruch 9 weisen gegenüber den bekannten Lösungsansätzen den Vorteil auf, daß die Flexibilität und Erweiterbarkeit der Dreh-/Drückbedienung für integrierte Systeme mit den Anforderungen für kleine, preisgünstige Anzeigen und den Anforderungen nach einer geringen Anzahl von Bedienelementen, beispielsweise in einem Kleinkraftfahrzeug vereint werden.

Im Vergleich zu integrierten Systemen mit Dreh-/ Drückschalter wird eine deutliche Verringerung der notwendigen Bedienschritte und des großen und relativ teuren Displays erzielt. Denn eine einfache, alphanumerische Anzeige genügt, um den Bediener zu leiten.

Die der vorliegenden Erfindung zugrunde liegende Idee besteht darin, zwei Funktionsgruppen, die operativ miteinander vorzugsweise gar nicht in Verbindung stehen, durch ein einheitliches, einfaches und leicht merkbares, das heißt intuitiv erlernbares, Bedienkonzept einer Bedienung durch den Menschen zugänglich zu machen.

Dies wird gemäß der vorliegenden Erfindung im wesentlichen dadurch erreicht, daß ein Bedienelement zur Steuerung von wenigstens zwei Funktionsgruppen zur Verfügung gestellt wird, wobei dieses Bedienelement einen Drehschalter enthält, der durch Drehen in eine bestimmte Richtung die Steuerung der ersten Funktionsgruppe, und durch Drehen in der entgegengesetzten Richtung aus einer beliebigen Drehstellung heraus die Steuerung der zweiten Funktionsgruppe aktiviert. Dabei sind die zu steuernden, verstellbaren Größen beider Funktionsgruppen in den verschiedenen, seriell aufeinander folgenden Drehstellungen erreichbar und einstellbar. Des weiteren ist eine erste, weitere Bedienfunktion vorzugsweise an demselben Bedienelement vorgesehen, mit der eine ausgewählte Funktionsgruppe ein- und ausstellbar ist. Des weiteren ist eine zweite Bedienfunktion, ebenfalls vorzugsweise an dem selben Bedienelement vorgesehen, mit der die an dem Drehschalter eingestellten Größen steuerbar sind, daß heißt, beispielsweise in ihrer Intensität variiert werden können, wie es beispielsweise beim Einstellen der Lautstärke eines Autoradios der Fall ist.

In den Unteransprüchen finden sich vorteilhafte Weiterbildungen und Verbesserungen des jeweiligen Gegenstandes der Erfindung.

Gemäß einer bevorzugten Weiterbildung ist die erste, weitere Bedienfunktion durch Drücken des Bedienelements, oder eines Teils dessen realisierbar. Dies hat den Vorteil, daß etwa beim Einsatz des Bedienelements in einem Kraftfahrzeugs das Bedienelement im Dunkeln bedient werden kann, ohne daß die Hand bei der Bedienung von einem Bedienelement zur einem anderen, möglicherweise schlecht sichtbaren, Bedienelement wechseln muß.

Gemäß einer weiteren bevorzugten Weiterbildung ist auch die zweite, weitere Bedienfunktion an dem selben Bedienelement durch eine Wippenschaltung realisiert. Das bedeutet, daß die durch die momentane Drehstellung erreichte Größe durch Bewegen des Wippschalters stärker oder schwächer eingestellt werden kann. Auch dieses Merkmal bringt den selben Vorteil, wie vorstehend angegeben, mit sich.

Gemäß einer weiteren bevorzugten Weiterbildung sind die verschiedenen Größen beider Funktionsgruppen nach deren operativen Wichtigkeit geordnet. Daß heißt, die einstellbaren Größen beider Funktionsgruppen werden für den täglichen Gebrauch analysiert und eine Wichtigkeitsrangfolge zwischen ihnen festgelegt. Die wichtigste Größe wird dann beim Drehen zuerst erreicht, bekommt also die erste der seriell aufeinander folgenden Schaltstufen des Drehschalters zugeordnet. Sie ist gefolgt von den weiteren Drehstellungen, die seriell aufeinander folgend in gleicher Drehrichtung mit abnehmender Wichtigkeit erreichbar sind. Auch dieses Merkmal erleichtert die Bedienung, da die wichtigsten Anwendungsfälle schnell beim Schalten erreicht werden.

Gemäß einer weiteren, bevorzugten Weiterbildung kann die wichtigste Größe einer Funktionsgruppe aus der Schalterstellung der unwichtigsten durch Weiterdrehen in der selben Richtung erreicht werden. Dieses Merkmal stellt im wesentlichen einen Endlos-Schalter dar, bei dem die absolute Stellung des Drehschalters unwichtig ist. Ist eine ursprünglich zur Einstellung beabsichtigte Größe versehentlich beim Drehen übersehen worden, so kann durch Weiterdrehen in der selben Richtung die selbe Größe wieder erreicht werden. Dies bringt den Vorteil mit sich, daß Fehlbedienungen leicht korrigierbar sind.

Gemäß einer weiteren bevorzugten Weiterbildung ist ein mit dem Bedienelement gekoppeltes Kontrolldisplay vorgesehen. Auf diesem ist vorzugsweise die momentan eingestellte Größe und gegebenenfalls ein Maß für die aktuell eingestellte Intensität angegeben. Weitere Angaben können je nach technischer Natur der eingestellten Größen angezeigt sein. In vorteilhafter Weise wird ein alphanumerisches Display zur Anzeige verwendet.

### ZEICHNUNGEN

Ausführungsbeispiele der Erfindung sind in den Zeichnungen dargestellt und in der nachfolgenden Beschreibung näher erläutert.

### Es zeigen:

- Fig. 1: einen Dreh-/Drückschalter mit zusätzlicher Wippenschaltfunktion zur Steuerung der Funktionsgruppe Radio und der Funktionsgruppe Klimaanlage in einem Kraftfahrzeug, sowie die Anzeige eines dem Schalter zugeordneten Displays,
- Fig. 2: beispielhafte Inhalte der Displayanzeige bezüglich verschiedener, einstellbarer Größen der beiden Funktionsgruppen aus Fig. 1,
- Fig. 3: ein Zustands-Übergangsdiagramm für die beiden Funktionsgruppen aus Fig. 1 und Fig. 2, aus dem das grundsätzliche Schaltschema des Dreh-/ Drückschalters sowie die jeweiligen Einstell-möglichkeiten durch Betätigen der Wippe dargestellt sind.

### BESCHREIBUNG DER AUSFÜHRUNGSBEISPIELE

In den Figuren bezeichnen gleiche Bezugszeichen gleiche oder funktionsgleiche Komponenten.

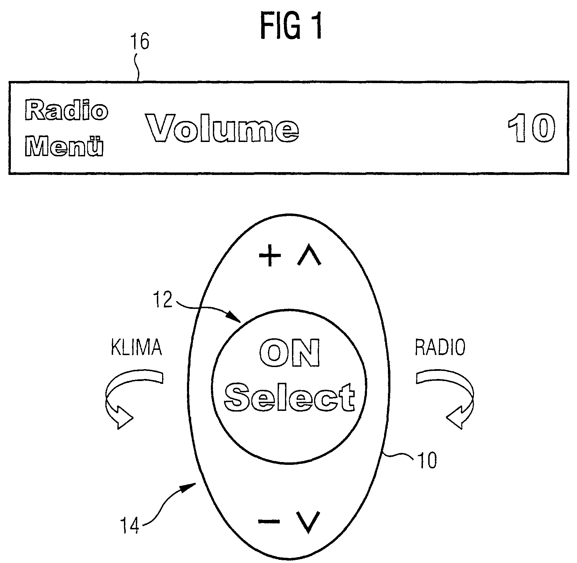

Fig. 1 zeigt einen Dreh-/Drückschalter mit zusätzlicher Wippenschaltfunktion zur Steuerung der Funktionsgruppe Radio und der Funktionsgruppe Klimaanlage in einem Kraftfahrzeug, sowie die Anzeige eines dem Schalter zugeordneten Displays.

Das Bedienelement 10 enthält einen runden Dreh-/ Drückschalter 12 sowie einen oval geformten Wippschalterbereich 14. Durch Drücken des Dreh-/Drückschalters wird das Gerät ein- beziehungsweise ausgeschaltet. Im vorliegenden Fall kann durch Drehen des Dreh-/Drückschalters 12 nach rechts ein Autoradio als Funktionsgruppe gesteuert werden, und durch Drehen des Dreh-/Drückschalters 12 nach links kann die im Kraftfahrzeug eingebaute Klimaanlage gesteuert werden. Ein alphanumerisches Display 16 ist im oberen Bereich der Zeichnung abgebildet. Es zeigt drei Felder an: links das jeweils eingestellte Menü, im vorliegenden Fall das Radiomenü, in der Mitte die der aktuellen Drehstellung entsprechende einstellbare Größe der Funktionsgruppe 'Radio', im vorliegenden Fall die Lautstärke, und rechts den aktuell eingestellten Intensitätswert dieser Einstellgröße, hier der Wert 10.

Durch Drehen des Dreh-/Drückschalters 12 weiter nach rechts werden seriell aufeinander folgend die zu verstellenden Größen der Radio-Funktionsgruppe, nämlich Lautstärke, Speicher und Sender steuerbar, und durch Drehen des Schalters 12 nach links werden die einstellbaren Größen Temperatur, Verteilung, Gebläse der Funktionsgruppe 'Klimaanlage' nacheinander einstellbar.

Mit dem Wippenschalter 14 kann eine Verstellung dieser Größen vorgenommen werden. Soll beispielsweise die Lautstärke um einen Intensitätssprung erhöht werden, so wird die Wippe im oben eingezeichneten Plus- oder Pfeil-nach-oben-Bereich einmal kurz gedrückt. Sollen mehrere Intensitätssprünge auf einmal gesteuert werden, so geschieht dies vorzugsweise durch entsprechendes, mehrmaliges Drükken, oder, alternativ dazu oder in Kombination mit einem kontinuierlichen, länger andauernden Druck auf den Plus-Bereich der Wippe, so wie es bei einer Computertastatur bei der wiederholten Eingabe eines Zeichens ebenfalls realisierbar ist.

Für den Minus-Bereich/Pfeil-nach-unten der Wippe 14 gilt Entsprechendes.

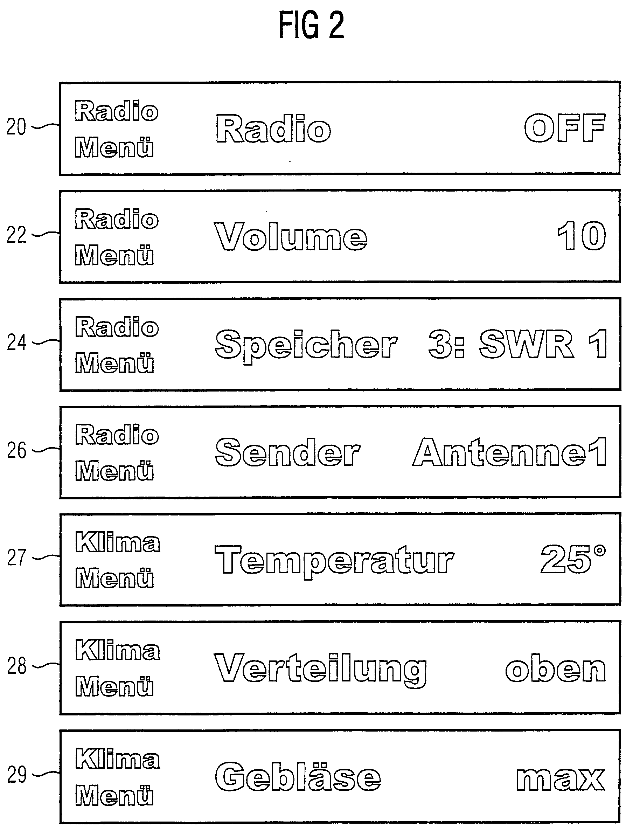

Fig. 2 zeigt beispielhafte Inhalte der Display-Anzeige 16. Der oberste Anzeigebalken 20 wird dargestellt, wenn der Dreh-/Drückschalter um eine Stufe nach rechts bewegt wird. Alternativ dazu kann dies auch eine Standardeinstellung sein, die automatisch als Ausgangsstellung verwendet wird. Der Anzeigebalken 20 sagt aus, daß das Radio derzeit steuerbar ist, und daß es ausgeschaltet ist. Durch Drücken des Dreh-/Drückschalters 12 kann nun das Radio eingeschaltet werden, was zu einer Änderung der Anzeige von Off nach On führen würde.

Durch Weiterdrehen nach rechts um eine Schaltstellung kann die Lautstärke, 'Volume', eingestellt werden, siehe auch Balken 22, Fig.2. Dazu muß die Wippe wie oben beschrieben entweder im Plus-Bereich oder im Minus-Bereich gedrückt werden.

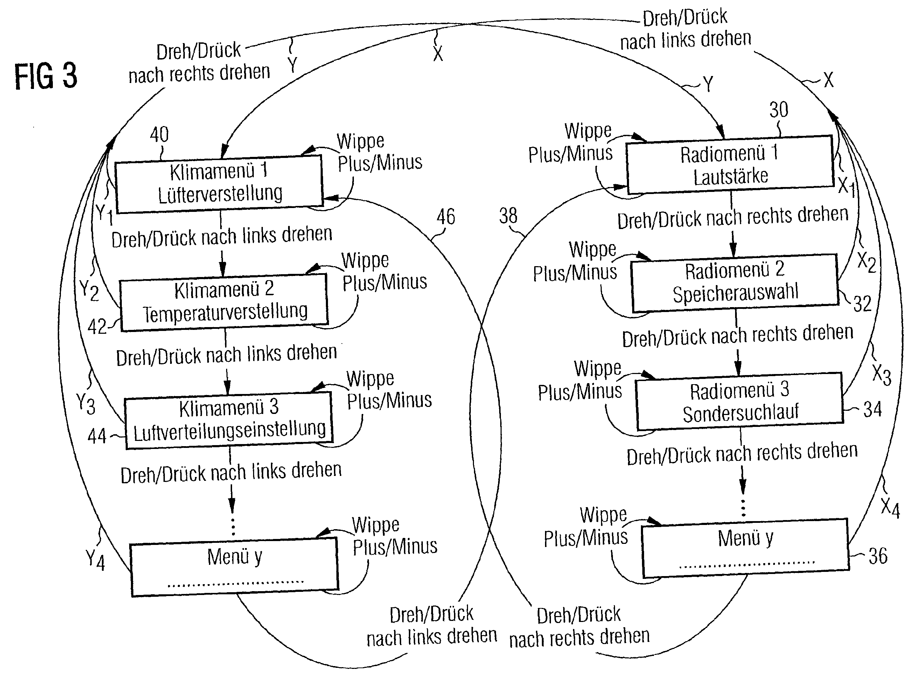

Sämtliche beschriebene Bedienmöglichkeiten sind ebenfalls in dem in Fig. 3 dargestellten Zustands-Übergangsdiagramm eingezeichnet. Anzeigebalken 20 entspricht einer dort nicht explizit dargestellten Ausgangsstellung und Anzeigebalken 22 entspricht Box 30. Die Wippenschaltfunktion ist in Fig. 3 jeweils durch einen kreisförmigen Pfeil am inneren Ende einer jeweiligen Box dargestellt.

Durch weiteres Drehen des Drehschalters 12 nach rechts gelangt man zu einer Speicherauswahl, Balken 24, Fig. 2. Hier können durch Betätigen der Wippe mehrere Sender nacheinander entsprechend einer vorgegebenen Speicherreihenfolge eingestellt werden.

Durch weiteres Drehen des Dreh-/Drückschalters 12 nach rechts kann der automatische Sendersuchlauf aktiviert werden, Balken 26, Fig. 2. Die Aktivierung kann in bevorzugter Weise durch Drücken des Dreh-/Drückschalters 12 realisiert sein. Findet das Radio einen geeigneten Sender, so kann durch Drücken des Dreh-/Drückschalters 12 dieser Sender gespeichert werden. Auf diese Weise können mehrere Sender an verschiedenen Speicherplätzen gespeichert werden.

Durch weiteres Drehen des Dreh-/Drückschalters 12 nach rechts können gegebenenfalls weitere Größen des Autoradios eingestellt werden. Beispielsweise könnte in einem Kombinationsgerät der CD-Player, ein MiniDisc-Player angesteuert werden. Dies ist in Fig. 3 mit den Fortsetzungspunkten bis zu Menüpunkt y dargestellt.

Ist Menüpunkt y erreicht, so führt ein weiteres Drehen des Dreh-/Drückschalters 12 nach rechts wieder zur Einstellung der Lautstärke des Radios. Dies ist durch den Pfeil 38 dargestellt.

Im linken Bereich von Fig. 3 sind die entsprechenden Menüstufen der zweiten Funktionsgruppe 'Klimaanlage' der Reihe nach dargestellt. Die wichtigste Einstellgröße ist die Lüfterverstellung in Box 40, die in Fig. 2 in Anzeigebalken 29 dargestellt ist. Danach folgt die in Box 42 dargestellte Temperaturverstellung, die dem Anzeigebalken 27 in Fig. 2 entspricht. Des weiteren ist die Luftverteilungseinstellung gemäß Box 44 und Anzeigebalken 28 einstellbar. Auch hier können durch die Wippenfunktion die Größen von ihrer Intensität her eingestellt werden.

Auch hier schließt sich nach einem fiktiv dargestellten Menüpunkt y in nachfolgender Drehrichtung nach links wieder als wichtigste Einstellgröße die Lüfterverstellung an. Dies ist mit Pfeil 46 dargestellt.

Die mit x1, x2, x3, x4 beziehungsweise x sowie mit y1, y2, y3, y4 und y bezeichneten Pfeile in Fig. 3 sollen das bevorzugte Merkmal des vorliegenden Ausführungsbeispiels verdeutlichen, das aus einer beliebigen, beispielsweise durch x3 dargestellten Drehschalterstellung heraus durch einfaches Drehen des Drehschalters nach links vom Radiomenü in das Klimamenü umgeschaltet werden kann, wobei gleichzeitig die wichtigste Einstellgröße, nämlich die Lüfterverstellung, direkt angesprungen wird. Somit entfällt die sonst notwendige Gerätetaste zum Umschalten zwischen den Geräten. Entsprechendes gilt für ein Umschalten von einer Größe im Klimamenü zu der Lautstärkegröße im Radiomenü.

Die Bedienelemente sind beim Einsatz in einem Kraftfahrzeug vorzugsweise griffgünstig in der Mittelkonsole untergebracht, wo sie blind gegriffen und bedient werden können. Da auf den Tasten immer die gleiche Funktionalität liegt und die Wippe und der Drehschalter haptisch gut zu unterscheiden sind, muß der Fahrer nicht auf die Bedieneinheit blicken, um die richtige Taste zu finden. Die Bedienung einer Funktionsgruppe kann daher erfindungsgemäß vereinfacht werden.

Das Anzeige-Display 16 kann im direkten Blickbereich vorzugsweise im Kombi oder in der oberen Mittelkonsole eingebaut sein. Auch eine Darstellung in einem HeadUp-Display ist möglich.

Obwohl die vorliegende Erfindung anhand eines bevorzugten Ausführungsbeispiels vorstehend beschrieben wurde, ist sie darauf nicht beschränkt, sondern auf vielfältige Weise modifizierbar

So kann beispielsweise statt der Bedienteile in der Mittelkonsole eine Bedienung mittels eines dreh- und drück-baren Lenkstockhebels vorgesehen sein, wobei Drehen die Anwahl der Größen bewirkt, Drücken in Längsrichtung vorzugsweise die Ein-/Aus-Funktion beziehungsweise die Speicherfunktion und ein Kippen des Lenkstockhebels nach oben/unten die Plus-/Minus-Funktion der oben beschriebenen Schaltwippe ausführt.

Grundsätzlich können auch andere Raumrichtungen für eine Schaltung realisiert werden, je nach ergonomischen Gegebenheiten im Einsatzbereich des Bedienelements.

Des weiteren ist das oben beschriebene Bedienkonzept auch erweiterbar, um mit weiteren Schaltmöglichkeiten, etwa ein Ziehen des gesamten Bedienelements nach oben oder ein Bewegen des gesamten Bedienelements nach rechts, links, vor oder zurück oder ein Drücken desselben nach unten weitere Funktionsgruppen zu steuern.

## Patentansprüche

1. Bedienverfahren, insbesondere für Komfortfunktionen im Kraftfahrzeug, zur Steuerung mindestens zweier Funktionsgruppen mittels eines Bedienelements, enthaltend die Bedienmöglichkeiten:
Drehen eines Drehschalters (12) in eine erste von zwei vorgegebenen Drehrichtungen zur Aktivierung der Steuerung der ersten Funktionsgruppe,
Drehen des Drehschalters (12) in die zweite Richtung aus einer beliebigen Drehstellung heraus zur Aktivierung der Steuerung der zweiten Funktionsgruppe, wobei verstellbare Größen beider Funktionsgruppen durch Drehen des Drehschalters (12) in verschiedene, seriell aufeinanderfolgende Drehstellungen erreicht werden.

2. Verfahren nach Anspruch 1, wobei durch eine erste, weitere Bedienfunktion des Bedienelements eine Funktionsgruppe ein- und ausstellbar sind.

3. Verfahren nach Anspruch 1 oder 2, wobei durch eine zweite, weitere Bedienfunktion die am Drehschalter (12) eingestellten Größen steuerbar sind.

4. Verfahren nach Anspruch 1, wobei die erste, weitere Bedienfunktion durch Drücken des Bedienelements realisierbar ist.

5. Verfahren nach Anspruch 1, wobei die zweite, weitere Bedienfunktion durch Betätigen einer Wippe (14) realisierbar ist.

6. Verfahren nach Anspruch 1 , wobei die verschiedenen Größen beider Funktionsgruppen nach deren operativen Wichtigkeit geordnet sind.

7. Verfahren nach dem vorstehenden Anspruch, wobei die wichtigste Größe einer Funktionsgruppe aus der Schalterstellung der unwichtigsten durch Weiterdrehen in derselben Richtung erreichbar ist.

8. Verfahren nach einem der vorstehenden Ansprüche, bei dem die momentan eingestellte Größe auf einem Display (16) darstellbar ist.

9. Vorrichtung zur Durchführung des Verfahrens nach mindestens einem der vorstehenden Ansprüche mit:
einem Drehschalter (12) mit mehreren Drehstellungen,
einem Drückschalter (12) zum Hin- und Herschalten zwischen zwei Schaltstellungen,
einem Wippschalter (14), der aus einer Neutralstellung heraus in zwei verschiedene Richtungen schalten kann.

10. Vorrichtung nach dem vorstehenden Anspruch, wobei der Drehschalter (12), der Drückschalter (12) und der Wippschalter in einem einzigen Bedienelment (10) integriert sind.

11. Vorrichtung nach einem der beiden vorstehenden Ansprüche zur Verwendung der Steuerung zweier Funktionsgruppen eines Kraftfahrzeugs.

12. Vorrichtung nach einem der drei vorstehenden Ansprüche, wobei die eine Funktionsgruppe ein Audiosystem und die andere Funktionsgruppe eine Klimasystem ist.
